# EUROPEAN PATENT APPLICATION

(11) **EP 3 093 507 A1**
(43) Date of publication of application: **16.11.2016**
(21) Application number: 15382250.7
(22) Date of filing: 14.05.2015
(51) Int. Cl.: F16B 5/12

(54) **FIXING ANCHOR**

(71) Applicant: BORGWARNER EMISSIONS SYSTEMS SPAIN, S.L.U., 36315 Vigo - Pontevedra (ES)
(72) Inventor: GRANDE FERNÁNDEZ, José Antonio, E-36206 Vigo - Pontevedra (ES); TRONCOSO, Germán, E-36315 Vigo - Pontevedra (ES)
(74) Representative: ABG Patentes, S.L.

(57) **Abstract**

The present invention relates to a fixing anchor for fixing components or parts to a support surface such as that provided by a rigid element, such as, for example, the engine block, or to intermediate elements which in turn are fixed to rigid elements, such as, for example, an intermediate pin mounted on the engine block, wherein said fixing is devised for bolted attachments.

The anchor according to the invention is made up of a structure that can be manufactured from a single part of punched and stamped sheet metal, where the development thereof in sheet metal forms a single part, giving rise to an inexpensive and easy-to-manufacture component. The special configuration from the single part of punched and stamped sheet metal shows high rigidity and the resulting anchor is particularly suitable for anchoring heavy components.

## Description

### Object of the Invention

The present invention is a fixing anchor for fixing components or parts to a support surface such as that provided by a rigid element, such as, for example the engine block, or to intermediate elements which in turn are fixed to rigid elements, such as, for example, an intermediate pin mounted on the engine block; where said fixing is devised for bolted attachments.

The anchor according to the invention is made up of a structure that can be manufactured from a single part of punched and stamped sheet metal, where the development thereof in sheet metal forms a single part, giving rise to an inexpensive and easy-to-manufacture component. The special configuration from the single part of punched and stamped sheet metal shows high rigidity and the resulting anchor is particularly suitable for anchoring heavy components.

### Background of the Invention

Securing a part or a component to any rigid element of an internal combustion engine or to an intermediate element which in turn is fixed on a rigid element requires a suitable anchoring system.

In particular, said system allows securing components such as a heat exchanger of an EGR (Exhaust Gas Recirculation) system to a rigid component such as, for example, the engine block, or to an intermediate component such as, for example, an intermediate pin.

Suitable anchoring of said components is achieved by means of a bolted attachment, which requires a housing for the bolt allowing said attachment. Said bolted attachment allows suitable support if the components to be fixed are heavy.

A known way of providing a housing that serves as a guiding support for the bolt in the bolted attachment is for it to be manufactured by means of molding or casting techniques as an integral part of the component to be secured. The drawback of this manufacturing technique for the anchoring system is that since it is an element obtained by casting, it has a high weight and a high manufacturing cost. In many cases the existence of cavities or through holes entails using cores and moving parts in the molds, making the manufacture considerably more expensive.

Anchoring of the components can also be achieved through a bracket-type support. Said support can be obtained in single part by means of stamping and allows the bolted attachment of both components, acting only as a support. The drawback of said support is its low rigidity, so it is not suitable for securing components having a high weight.

The guiding support for a bolted attachment according to the present invention, which is very inexpensive to manufacture, is suitable for anchoring any component and obviates the existing problems of the mentioned solutions.

### Description of the Invention

A first inventive aspect provides a fixing anchor for bolted attachments, suitable for the securing thereof on a support surface, that is, suitable for securing at least one device or block of devices to engine blocks or to intermediate components mounted on engine blocks for internal combustion engines. The fixing anchor according to this first inventive aspect comprises:
Said anchor is configured from a single part of punched and bent sheet metal and comprises:
   - *a prismatic body prolonged according to a longitudinal direction X-X' formed by a base laterally extended after a bend, towards either side of said base, by means of respective flanks; and prolonged according to the longitudinal direction X-X' after a bend, at either end, according to respective compression plates;*

The part configured in single part in the development thereof in sheet metal establishes the final configuration by means of bends through certain lines until forming a prismatic body. This prismatic body is prolonged according to a longitudinal direction X-X', which is the direction coinciding with the direction of the bolt passing through same and the direction in which said bolt confers compressive stresses.

A base formed by a plane and by two flanks located on either side of the base is identified as an essential part of this prismatic body. Between the base and each flank there is a bend that is parallel to the longitudinal direction X-X'. In turn, at either end, according to this same longitudinal direction, respective compression plates which are bent according to a bend transverse to the longitudinal direction with a curvature such that said plates come into contact with the flanks are identified in the sheet metal development. These compression plates are the plates on which the bolt exerts the clamping force in compression and transmits its stress both to the base and to the flanks.

The compression plate comprises:
- *at least two regions of the surface thereof such that they are supported on the edges of either flank, respectively, in order to withstand compressive stresses between the compression plates; and,*
- *a hole configured for allowing the passage of a compression element such as a bolt or clamping screw.*

Contact between said plates and the flanks is established after the bend of the compression plates. The way of contacting is by means of two regions of the surface thereof, two regions which are located on the inner face of said compression plates after the bend, which are supported on the edges of either flank, respectively. The compression of the clamping bolt is transmitted to the prismatic body, to the base through the bend line connecting the compression plate and the base, and to the flanks through the support regions.

Either compression plate has a hole that allows the passage of the bolt through the inside of the prismatic body, and with the support elements thereof, the head of the bolt and the nut, for example, exerts compressive stress against the anchor, placing therebetween the part to be fixed.

The anchor part can in turn be attached, either through the flanks or through the free edges of the flanks or the free edges of the compression plates, or both, to the support surface, for example by means of brazing. According to one embodiment, fixing is done through the edges of the flanks establishing an extension in the form of wings with a bend according to a curvature opposite the curvature between the flank and the base. The wings are what are attached, for example by means of welding, to the support surface.

### Description of the Drawings

These and other features and advantages of the invention will become clearer based on the following detailed description of a preferred embodiment given solely by way of illustrative and non-limiting example in reference to the attached drawings.
Figure 1 shows the sheet metal development of an embodiment of an anchor according to the invention.
Figure 2 shows the same embodiment once the anchor is built from its sheet metal development.
Figure 3 shows the sheet metal development of a second embodiment of an anchor according to the invention.
Figure 4 shows the same second embodiment once the anchor is built from its sheet metal development.

### Detailed Description of the Invention

The present invention is a fixing anchor for bolted attachments configured from a punched and subsequently bent sheet metal, wherein the sheet metal development shows a single part. This single part is enough to establish anchoring; nevertheless, it is possible to add elements on this single part, for example by means of welding, giving rise to reinforcements or other add-on parts, wherein the existence of these additional elements on the anchor of the invention does not prevent said invention from being equally reproduced.

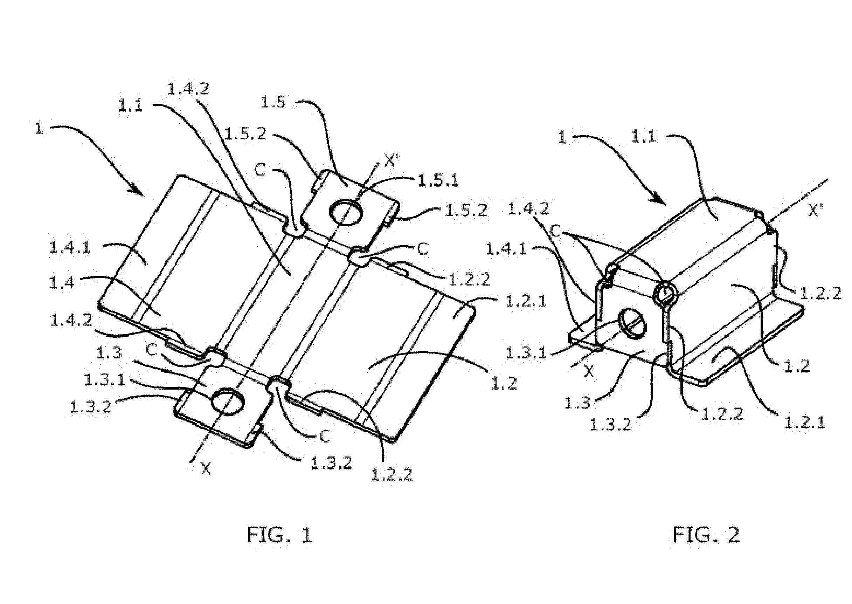

Figure 2 shows a particular embodiment of the invention where Figure 1 is the sheet metal development of this same anchor.

Figure 2 shows the prismatic body of this embodiment formed by 5 plates:
- a base (1.1) having a rectangular configuration,
- two flanks (1.2, 1.4); and
- two compression plates (1.3, 1.5).

The base (1.1) is what makes up the innermost area in the sheet metal development of Figure 1 from which the remaining plates extend. A rectangular flank (1.2, 1.4) extends from each of the larger sides of the also rectangular base (1.1), and a compression plate (1.3, 1.5) extends from each of the smaller sides of the rectangular base (1.1). The link between the base (1.1) and each of the remaining four plates (1.2, 1.3, 1.4, 1.5) is through a narrow band that has been distinguished in the drawings by means of two thin lines. The thickness of the preferably metal plate does not allow an infinitely narrow bend line but rather the bends are formed through the identified narrow band which is curved according to a preferably small radius of curvature.

In the sheet metal development, each of the corners (C) has a slot with rounded corners eliminating the material that would remain after the bends located in the corners of the prismatic body. This material would concentrate stresses and therefore, as shown in Figure 2, each of the bends through the narrow bands only shows a curvature along the bending direction. The expression "a curvature" is used to distinguish those sheet metal deformations combining two curvatures according to different directions and giving rise to dished areas. This bending configuration with a single curvature per bend along the entire narrow band allows easy bending.

After the four bends, the compression plates (1.3, 1.5) are arranged parallel to one another, and these plates (1.3, 1.5) are arranged perpendicular to the base (1.1). Each of the compression plates (1.3, 1.5) has a hole (1.3.1, 1.5.1) for the passage of the clamping bolt and the fixing of the part to be fixed to the anchor (1) according to this embodiment.

The side edges of the compression plates (1.3, 1.5) are essentially parallel to one another such that the flanks (1.2, 1.4) are also, after the bend of the plates, positioned parallel to one another. The expression "essentially" parallel is used because according to this embodiment the edges of the compression plates (1.3, 1.5) have stepped projections (1.3.2, 1.5.2) preventing said edges from being straight along the entire length; rather they are straight by sections.

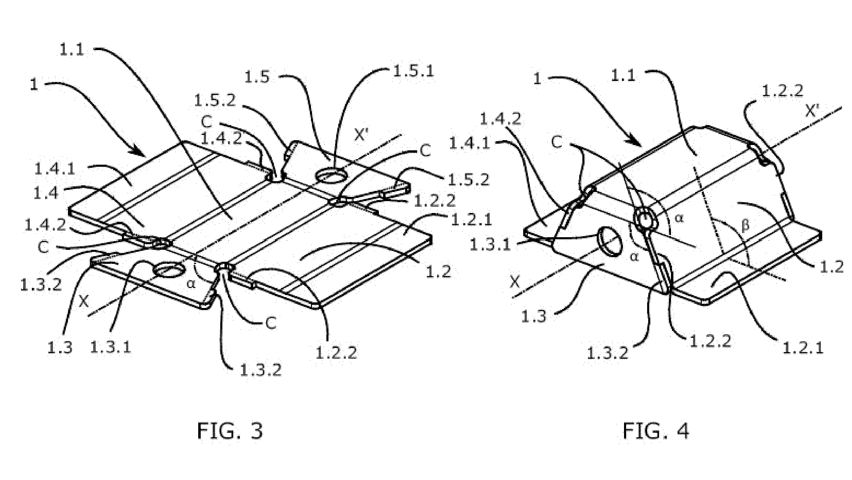

According to a second embodiment, where the anchor is shown in Figure 4 and the sheet metal development thereof is shown in Figure 3, the side edges of the compression plates (1.3, 1.5) are divergent from their link with the base (1.1). This divergent configuration entails bends between the base (1.1) and the flanks (1.2, 1.4) at an angle α greater than the right angle measured on the inner faces facing the surface where the anchor is fixed. This angle α is shown in the sheet metal development of Figure 3. Angle β between the flanks (1.2, 1.4) and their wings (1.2.1, 1.4.1), where they exist, where in this case the measured angle is the outer angle, is also greater. If the support surface where the anchor is fixed is a plane, angles (α) and (β) are equal.

The body of the anchor (1) has a rectangular plate base (1.1) smaller than the opposite rectangle of the prism, the one which corresponds to the base coinciding with the support surface where the anchor body (1) is fixed.

The configuration of this second example increases rigidity of the anchor and stability against large stresses exerted by the element anchored to the anchor body (1). The perimeter that is attached, for example by means of welding, to the support surface is also larger and therefore the attachment strength is higher; this configuration being particularly valuable when the support for the anchor in the support surface are the edges of the compression plates (1.3, 1.5) and the edges of the flanks (1.2, 1.4) opposite the sides of the bend with the base (1.1).

In both embodiments one or both compression plates (1.3, 1.5) comprise on the side edge thereof a stepped projection (1.3.2, 1.5.2) that is complementary to another stepped projection (1.2.2, 1.4.2) located on the edge of the flank (1.2, 1.4) on which it is supported.

The stepped projections (1.3.2, 1.5.2) of the compression plates (1.3, 1.5) are thereby the surface regions of the compression plate (1.3, 1.5) which are supported on the edge of the flank (1.2, 1.4) corresponding to it for transmitting the compressive stresses conferred by the bolt after it is tightened.

According to these embodiments, the anchor (1) shows a symmetry with respect to a central plane containing the longitudinal direction X-X'. This symmetry is likewise reflected in the sheet metal development because said development also shows symmetry with respect to a central axis according to the longitudinal direction X-X'.

In these embodiments the stepped projections (1.3.2, 1.5.2) located on either side of their corresponding compression plate (1.3, 1.5) are complementary to the stepped projections (1.2.2, 1.4.2) located on the edge of the flank (1.2, 1.4) corresponding to it such that not only is the compression part (1.3, 1.5) supported on the flank (1.2, 1.4), but the flank (1.2, 1.4) is also supported on the compression plate (1.3, 1.5).

In these embodiments, once the flanks (1.2, 1.4) and compression plates (1.3, 1.5) are bent, Figure 2 shows how the free edges of the stepped projections (1.3.2, 1.5.2) of each compression plate (1.3, 1.5) emerge on the surface of the flank (1.2, 1.4), and the free edges of the stepped projections (1.2.2, 1.4.2) of the flanks (1.2, 1.4) emerge on the surface of the compression plates (1.3, 1.5).

In these embodiments, the flanks (1.2, 1.4) are prolonged in the sheet metal development by means of respective wings (1.2.1, 1.4.1). These wings (1.2.1, 1.4.1) have a bend with a curvature opposite the curvature of the bend between the base (1.1) and its flank (1.2, 1.4). Figures 2 and 4 show how the curvature of the bend linking the wing (1.2.1, 1.4.1) to its flank (1.2, 1.4) is such that the two wings (1.2.1, 1.4.1) are contained in a plane and are therefore adapted for being secured on a planar support surface. The curvatures of the bends linking the wing (1.2.1, 1.4.1) and its flank (1.2, 1.4) will depend on the configuration of the support surface on which the anchor (1) is fixed.

These bends, as shown in any of the drawings, are made through a narrow band that has been depicted by means of two thin parallel lines.

After bending each of the narrow bands, giving rise to the final configuration of the anchor (1), the contacting surfaces are welded, preferably by means of brazing.

In this embodiment, the support of the compression plates (1.3, 1.5) through the regions that establish the stepped projections (1.3.2, 1.5.2) on the free edges of the flanks (1.2, 1.4) allows the compressive stresses conferred by the bolt between the two contacting surfaces to be perpendicular to said contacting surfaces, and therefore the weld not to be the only element responsible for the transmission of stress or such weld to be the only element responsible for resisting excessive shear stresses.

Figures 1 and 3 distinguish those regions located in the stepped projections (1.2.2, 1.3.2, 1.4.2, 1.5.2) of both the compression plates (1.3, 1.5) and the flanks (1.2, 1.4) which are in contact with other surfaces in the welded attachment by means of dotted lines.

The result is an anchor part (1) which allows the compressive stresses conferred by a bolt between its compression surfaces (1.3, 1.5) and which can be attached to a support surface through:
- the free edges of the compression plates (1.3, 1.5) located opposite the bend line with the base (1.1),
- the free edges of the flanks (1.2, 1.4) located opposite the bend line with the base (1.1),
- through wings (1.2.1, 1.4.1) configured as extensions of the flanks (1.2, 1.4), as shown in the drawings, extensions of the compression plates (1.3, 1.5), or of both,
- through the outer surfaces of the flanks (1.2, 1.4), or
- a combination of any of the foregoing.

## Claims

1. A fixing anchor for bolted attachments adapted for the securing thereof on a support surface and configured from a single part of punched and bent sheet metal comprising a prismatic body (1) prolonged according to a longitudinal direction X-X' formed by a base (1.1) laterally extended after a bend, towards either side of said base (1.1), by means of respective flanks (1.2, 1.4); and prolonged according to the longitudinal direction X-X' after a bend, at either end, according to respective compression plates (1.3, 1.5); wherein each compression plate (1.3, 1.5) comprises:
- at least two regions of the surface thereof such that they are supported on the edges of either flank (1.2, 1.4), respectively, in order to withstand compressive stresses between the compression plates (1.3, 1.5); and,
- a hole (1.3.1, 1.5.1) configured for allowing the passage of a compression element such as a bolt or clamping screw.

2. The fixing anchor according to claim 1, wherein it additionally comprises two wings (1.2.1, 1.4.1) for being supported on the support surface, each of them (1.2.1, 1.4.1) formed after a bend as a lateral extension of the corresponding flank (1.2, 1.4), wherein the bend between the flank (1.2, 1.4) and the wing (1.2.1, 1.4.1) has the curvature opposite the curvature of the bend between the base (1.1) and said flank (1.2, 1.4).

3. The fixing anchor according to claim 1 or 2, wherein one or both compression plates (1.3, 1.5) comprises on the side edge thereof a stepped projection (1.3.2, 1.5.2) that is complementary to another stepped projection (1.2.2, 1.4.2) located on the edge of the flank (1.2, 1.4) on which it is supported, such that the stepped projection or projections (1.3.2, 1.5.2) are the surface regions of the compression plate (1.3, 1.5) which are supported on the edge of the flank (1.2, 1.4) corresponding to it.

4. The fixing anchor according to claim 3, wherein the stepped projections (1.2.2, 1.4.2) located on the edge of the flank (1.2, 1.4) are supported on the edge of the compression plate (1.3, 1.5) that has the complementary stepped projection (1.3.2, 1.5.2) so as to increase rigidity of the part.

5. The fixing anchor according to any of the preceding claims, wherein the angle α of the bends in one direction between the base (1.1) and the flank (1.2, 1.4) and the angle β of the corresponding bends in the opposite direction between the flank (1.2, 1.4) and the wing (1.2.1, 1.4.1) are greater than or equal to 90 degrees.

6. The fixing anchor according to the preceding claim, wherein the angle α of the bends in one direction between the base (1.1) and the flank (1.2, 1.4) and the angle β of the corresponding bends in the opposite direction between the flank (1.2, 1.4) and the wing (1.2.1, 1.4.1) are 90 degrees.

7. The fixing anchor according to any of the preceding claims, wherein the punched sheet metal, before bending, comprises in the corners between the compression plate (1.3, 1.5) and the flank (1.2, 1.4) a slot (C) having rounded edges to aid in bending and to reduce the concentration of stresses.
